# EUROPÄISCHE PATENTANMELDUNG

(11) **EP 1 172 667 A2**
(43) Veröffentlichungstag der Anmeldung: **16.01.2002**
(21) Anmeldenummer: 01000276.4
(22) Anmeldetag: 12.07.2001
(51) Int. Cl.: G01T 1/00

(54) **Röntgendetektor mit einer Photosensorenanordung und einer Szintillatoranordnung**

(30) Priorität: 14.07.2000 DE 10034575
(71) Anmelder: Philips Corporate Intellectual Property GmbH, 52064 Aachen (DE); Koninklijke Philips Electronics N.V., 5621 BA Eindhoven (NL)
(72) Erfinder: Simon, Matthias, Dr. Philips Corp.Intel.Prop. GmbH, 52064 Aachen (DE); Rütten, Walter, Dr. Philips Corp.Intel.Prop. GmbH, 52064 Aachen (DE)
(74) Vertreter: Volmer, Georg, Dipl.-Ing.

(57) **Zusammenfassung**

Die Erfindung bezieht sich auf einen Röntgendetektor zur Umwandlung von RöntgenStrahlung (27) in elektrische Ladung mit einer Szintillatoranordnung (21) und einer darunter befindlichen Photosensorenanordnung (28), bei der das in Öffnungen Z zwischen den Pixeln P einfallende Licht mittels einer Reflektoranordnung (23) in den Photosensor D reflektiert wird und zur Signalerhöhung beiträgt, ohne dabei die Ortsauflösung des Röntgendetektors zu verschlechtern.

## Beschreibung

Die Erfindung bezieht sich auf einen Röntgendetektor zur Umwandlung von Röntgenstrahlung in elektrische Ladungen, mit einer Photosensorenanordnung und einer auf einer ersten Seite der Photosensorenanordnung befindlichen Szintillatoranordnung.

Dynamische Röntgendetektoren werden im Bereich der medizinischen Diagnostik eingesetzt. Sie gelten als universelle Detektorkomponenten, die in verschiedenen anwendungsspezifischen Röntgengeräten verwendet werden können. Eine wichtigs Eigenschaft dabei ist die Möglichkeit, Röntgenbilder und Röntgenbildsequenzen mit geringen Dosen aufnehmen zu können. Hierzu wird ein möglichst hohes Signal-zu-Rausch-Verhältnis des Röntgendetektors angestrebt.

In der derzeitigen Röntgendetektortechnologie werden von einer Strahlungsquelle ausgesandte Röntgenquanten von einer Szintillatoranordnung (z.B. CsI) absorbiert, die auf einer Photosensormatrix aus Dünnschichtelektronik liegt. Das in der Szintillatoranordnung entstehende Licht wird von je einem Photosensor pro Matrixzelle (Pixel) registriert. Die Photodiode füllt nicht die gesamte Fläche des Pixels aus. Ein Teil wird von einem Dünnschichttransistor sowie von Signal- und Steuerleitungen eingenommen, außerdem existieren zwischen den Pixeln und Leitungen Öffnungen zur Isolation von ca. 10 µm Breite. Licht, dass durch diese Öffnungen an den Photodioden vorbei einfällt, geht für die Signalerzeugung verloren. Der Anteil dieses Lichts an der Gesamtlichtmenge, die von der Szintillatorenschicht in Richtung der Photosensorenanordnung abgegeben wird, kann aufgrund der geometrischen Verhältnisse auf ca. 10 % abgeschätzt werden. Eine grobe Messung hat ca. 8 % Lichtverlust durch die Öffnungen ergeben. Dieses Licht dringt durch eine Substratplatte in den Bereich unterhalb der Photodioden ein. Dort muss die unkontrollierte Streuung des Lichts vermieden werden, weil Licht, dass in Pixeln weit von seinem Entstehungsort registriert wird, zu einer Verschlechterung der Auflösung führt.

Unterhalb der auf der zweiten Seite der Photosensorenanordnung befindlichen Substratplatte, die beispielsweise als Glasplatte realisiert ist, befinden sich Leuchtmittel, die Licht zum optischen Zurücksetzen der Pixel aussenden. Dieses Zurücksetzen wird auch als "backlight" oder "reset light" bezeichnet. Dieses Rücksetzlicht passiert aus Richtung der zweiten Seite der Photosensorenanordnung die Öffnungen zwischen den Photodioden, wird an der Szintillatorenschicht reflektiert bzw. gestreut und von den Photodioden registriert und setzt diese zurück.

In der US 5936230 wird ein Sensorarray beschrieben, bei dem ein Phosphorkonverter auftreffende Röntgenstrahlung in sichtbares Licht wandelt, welches von unter diesem Phosphorkonverter angeordneten Photosensoren in elektrische Ladung umgewandelt wird. Zwischen dem Phosphorkonverter und den Photosensoren sind Reflektorstreifen angeordnet. Dadurch wird die Lichtstrahlung, die in die Zwischenräume zwischen den Photosensoren reflektiert wird, in den Phosphorkonverter zurückreflektiert, so dass diese von dort in die Photozellen reflektiert werden kann. Damit wird eine erhöhte Lichtdetektion erreicht. Das Anbringen derartiger Reflektions- oder Reflektorstreifen zwischen den Photosensoren und dem Phosphorkonverter erweist sich herstellungstechnisch als sehr aufwendig

Aufgabe der Erfindung ist es deshalb, eine Röntgendetektoranordnung anzugeben, bei der eine effektive Rückreflektion des in die Öffnungen einfallenden Lichtes realisierbar ist und die einfach herzustellen ist.

Diese Aufgabe wird erfindungsgemäß dadurch gelöst, dass sich auf der der ersten Seite gegenüberliegenden zweiten Seite der Photosensorenanordnung eine Reflektoranordnung befindet.

Der Röntgendetektor umfasst eine Szintillatoranordnung, die sich über einer Photosensorenanordnung befindet. Die Photosensorenanordnung weist regelmäßig zwei gegenüberliegende Seiten auf. Dabei ist die Szintillatoranordnung auf der einen ersten Seite der Photosensorenanordnung angeordnet und die Reflektoranordnung befindet sich auf der zweiten, der ersten Seite gegenüberliegenden Seite der Photosensorenanordnung.
Dabei ist im Normalfall davon auszugehen, dass die Röntgenstrahlung von oben aus Richtung der ersten Seite der Photosensorenanordnung auf die Szintillatoranordnung trifft, darunter die elektrische Ladungen detektierende Photosensorenanordnung angeordnet ist und die Reflektoranordnung unter der Photosensorenanordnung auf der zweiten Seite der Photosensorenanordnung angeordnet ist.

Die Öffnungen zwischen den Photosensoren ermöglichen, dass von der Szintillatoranordnung erzeugte Lichtanteile ungenutzt die Photosensorenanordnung passieren. Um diese Lichtanteile für die Signalerzeugung auszunutzen, weist der Röntgendetektor auf der zweiten Seite, unterhalb der Photosensorenanordnung eine gleichmäßige Reflektoranordnung auf.

In einer vortehaften Ausgestaltung der Erfindung ist die unter der Photosensorenanordnung angebrachte Reflektoranordnung für von unten oder aus Richtung der zweiten Seite der Photosensorenanordnung einfallendes Licht durchlässig. Dabei ist die Reflektoranordnung so beschaffen, dass sie das von der Szintillatorenschicht ausgesendete Licht möglichst gut reflektiert. Gleichzeitig ist die Reflektoranordnung für Licht, welches aus Richtung der zweiten Seite der Photosensorenanordnung auf die Reflektoranordnung trifft, hinreichend transparent, um das von unten einfallende Rücksetzlicht passieren zu lassen.

Die gezielte Beeinflussung von Reflektions- und Transmissionsvermögen der Reflektoranordnung geschieht durch die Wahl von Schichtdicke und Material, d.h. seinem Brechungsindex. Die optischen Eigenschaften dieser als dünne Schicht realisierten Reflektoranordnung beruht auf Interferenz Die Wellenselektivität wird im allgemeinen durch die Verwendung mehrerer Schichten aus unterschiedlichen Materialien gesteigert. Als Materialien sind hochschmelzende Metallfluoride (MgF₂, CaF₂) und -oxide (Ta₂O₅, SiO₂, ZrO₂) üblich. Die Schichtdicken liegen in der Größenordnung der Lichtwellenlänge bis zu einigen Mikrometern. Großflächige homogene Beschichtungen sind leicht herzustellen.

Für eine Verwendung bei einem dynamischen Röntgendetektor müssen die optischen Eigenschaften wie folgt eingestellt werden. Die Reflektivität sollte in einem breiten Spektralbereich von ca. 450 nm bis ca. 600 nm möglichst groß sein ( > 90 %). Gleichzeitig muss die Schicht der Reflektoranordnung für Licht anderer Wellenlängen möglichst transparent sein, um das Rücksetzlicht der beispielsweise Rücksetzleuchtdioden, die unter der Photosensorenanordnung angeordnet sind, passieren zu lassen. Die erste Forderung hat dabei jedoch Priorität, da möglichst viel Licht von der Reflektoranordnung reflektiert werden soll, um das Signal zu erhöhen. Gewisse Verluste beim Durchlassen des Rüchsetzlichtes der Rücksetzleuchtdioden sind zu tolerieren, da diese Rücksetzleuchtdioden mit ausreichender Intensität betrieben werden können.

In einer weiteren Ausgestaltung der Erfindung ist es vorteilhaft eine Reflektoranordnung unter einem den Röntgendetektor tragenden Substrat anzuordnen, wobei dieses Substrat vorzugsweise als Glasschicht realisiert ist. Dabei befindet sich dieses Substrat zwischen der Photosensorenschicht und der Reflektoranordnung. Dies hat den Vorteil, dass die Reflektoranordnung keinerlei elektrische Einflüsse auf die Photosensorenanordnung ausüben kann.

In einer weiteren Ausgestaltung der Erfindung ist die Reflektoranordnung als dielektrische Schicht ausgebildet. Die dielektrischen Schichten stellen elektrische Isolatoren dar und es treten keine zusätzlichen Kapazitäten auf, die beispielsweise bei metallischen Reflektoranordnungen auftreten würden.

Technologisch vorteilhaft ist es, die dielektrische Reflektoranordnung auf der Unterseite der Substratplatte anzubringen. Im Gegensatz zu der Anbringung der dielektrischen Reflektoranordnung direkt unter der Photosensorenanordnung ist es dann nicht notwendig, dass die Prozesse zum Aufbringen der Photodioden und der erforderlichen Dünnschichtelektronik zum Auslesen der detektierten Ladungsträger verträglich mit dem Prozess zum Aufbringen der dielektrischen Reflektorschicht sind.

Da das Licht bei der Rückreflektion zweimal die Glasplatte des Substrates passieren muss, ist die Ausbeute und vor allem die Ortsauflösung geringer, wenn die dielektrische Reflektoranordnung unterhalb der Substratplatte angeordnet ist.

Eine andere vorteilhafte Möglichkeit zur Rückreflektion ist eine Beschichtung der Oberseite der Glasplatte des Substrates mit einer Metallschicht, zB. aus Aluminium, die maximal ca. 90 % Rückreflektionsvermögen hat. Diese metallische Reflektionsschicht ist dann direkt oder unmittelbar unter der Photosensorenschicht angeordnet. Durch eine entsprechend dünne Reflexionsschicht kann auch eine Teilverspiegelung von zB. 80 % erreicht werden. Dadurch wird in den Öffnungen zwischen den Photosensoren fast das gesamte Licht nach oben rückreflektiert und steht für die Signalgewinnung zur Verfügung, die 20 % Transmission reichen jedoch aus, um genügend von unten einfallendes Rücksetzlicht zum Rücksetzen der Photosensoren passieren zu lassen. Diese elektrisch leitende Reflexionsschicht beeinflusst die elektrischen Eigenschaften der Pixelstruktur. Sie muss entsprechend isoliert zur Photosensorenschicht angebracht werden.

Eine weitere vorteilhafte Alternative ist die Rückreflektion des Lichtes durch geeignete reflektierende Strukturen. Das durch die Öffnung in der Photosensorenanordnung dringende Licht kann so wieder in Richtung der ersten Seite der Photosensorenanordnung zurückgeworfen werden. Als reflektierende Strukturen kommen zum einen Retroreflektoren auf der Größenskala von µm, zum anderen zylindrische Hohlspiegel in Frage. Retroreflektoren an einer Glas-Luft- Grenzschicht arbeiten mit Totalreflektion und bedürfen deshalb keiner zusätzlichen Beschichtung. Retroreflektoren haben eine derartige geometrische Struktur, dass sie einfallendes Licht in die Einfallsrichtung zurück reflektieren. Die reflektierende Strukturen können sowohl an der Oberseite des Substrates, als auch an der Unterseite des Substrates angeordnet sein. Die Mikrospiegel müssen ihre Brennebene in der Durchtrittsebene des Lichts, also der oberen Seite der Glasplatte des Substrates, und eine reflektierende Metallschicht, zB. Aluminium, an der Rückseite besitzen. Da die reflektierenden Bereiche unterhalb der Öffnungen zwischen den Photodioden angebracht sind, kann das Rücksetzlicht in diesem Fall nicht mehr direkt von unten durch die Glasplatte nach oben gelangen. Bei einer geeigneten Anordnung der Rücksetzleuchten kommt aber ausreichend viel Rücksetzlicht auf indirektem Weg zu den Photosensoren, so dass diese zurückgesetzt werden können. Zur Realisierung dieser Lösung müsste die Glasplattenunterseite mechanisch im µm-Bereich bearbeitet und strukturiert werden.

Vorteilhaft ist auch eine Einmischung reflektierender Substanzen in die Substratplatte, so dass nicht zusätzlich reflektierende Schichten aufgebracht werden müssen. Dabei sind Verbindungen wie TiO₂ einsetzbar, wobei durch das entsprechende Mischungsverhältnis mit dem Substratmaterial die Reflektivität einstellbar ist. Bei dieser Realisierung ist ebenfalls keine Isolation zu der Photosensorenschicht notwendig.

Bei allen vorgeschlagenen Anordnungen wird das Licht nach oben in Richtung Szintillatoranordnung zurückgelenkt. Es wird dann entweder an der Unterseite dieser Szintillatorschicht reflektiert bzw. gestreut oder dringt erneut in das CsI ein. Dort unterliegt es dann den gleichen Ausbreitungsbedingungen wie Licht, dass durch die Absorption eines Röntgenquants entstanden ist, d.h. es wird von der säulenartigen Struktur an der seitlichen Aus breitung gehindert und gelangt zB. nach weiteren Reflektionen an einer Deckschicht zur Photodiode. Die Deckschicht ist für die energiereiche von oben einfallende Röntgenstrahlung durchlässig. Mit den angegenen Anordnungen kann somit ein großer Anteil des bisher nicht genutzten Lichts zur Signalgewinnung verwendet werden, ohne dabei die Ortsauflösung des Röntgendetektors zu verschlechtern.

Vorteil der Erfindung ist, dass mittels der vorgeschlagenen Maßnahmen das bisher nicht zum Signal beitragende Licht zur Signalerzeugung genutzt werden kann. Die auf die Photdioden auftreffende Lichtmenge kann nach Abzug von Verlusten durch Streuung und unvollständige Reflektion um ca. 7 % gesteigert werden. Dadurch erhöht sich das Signal-zu-Rausch-Verhältnis des Detektors um bis zu 0.6 dB. Dies ist gerade bei der Bildgebung mit geringen Röntgendosen eine entscheidende Verbesserung Insbesondere bei der vorgeschlagenen Realisierung mittels einer dielektrischen Schicht auf der Oberseite der Glasplatte entstehen keine hohen Kosten, da eine derartige Beschichtung in Standardverfahren durchgeführt werden kann. Weiterhin können die Kosten für derzeit verwendete absorbierende Filter reduziert oder eingespart werden.

Anhand der Zeichnungen werden Ausführungsbeispiele näher erläutert. Es zeigen:
- Fig.1:: mehrere Photosensoren in der Ansicht von oben.
- Fig.2:: eine Schnittdarstellung durch einen Röntgendetektor mit Reflektorschicht über der Glasplatte,
- Fig.3:: Röntgendetektor mit Reflektorschicht unter der Glasplatte
- Fig.4:: Röntgendetektor mit Retroreflektoren

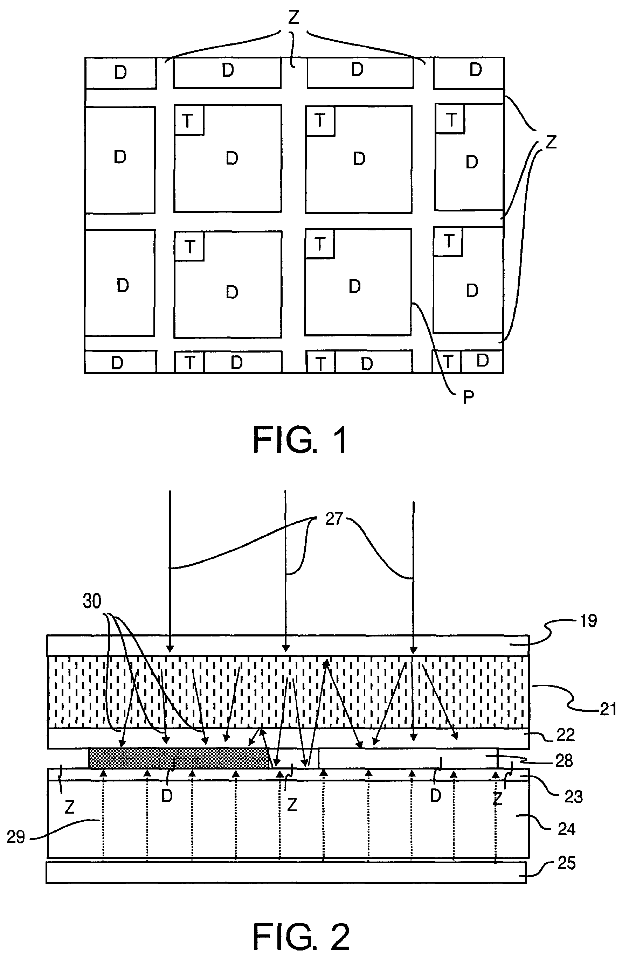

In Figur 1 sind mehrere Photodioden D dargestellt. Zwischen diesen Photodioden D sind Zwischenräume Z angeordnet. Dabei füllt die Photodiode nicht die gesamte Fläche eines Pixels P aus. Ein Teil T wird von einem Dünnschichttransistor sowie von Signal-, und Steuerleitungen eingenommen. Die Zwischenräume Z dienen zur Isolation zwischen den einzelnen Pixeln P und haben eine Breite von ca. 10 µm.

Figur 2 zeigt einen erfindungsgemäßen Aufbau eines Röntgendetektors mit einer Szintillatoranordnung 21 und einer Reflektoranordnung 23, die unter der Photodiodenschicht 28 angeordnet ist. Die Röntgenstrahlung 27 fällt auf die Szintillatoranordnung 21. Dort werden die Röntgenstrahlen 27 in sichtbares Licht 30 umgewandelt. Durch die säulenartige Struktur des Szintillatormaterials werden Lichtanteile auch in Richtung der einfallenden Röntgenstrahlen reflektiert. Eine oberhalb der Szintillatoranordnung 21 angeordnete Deckschicht 19 reflektiert diese Lichtanteile in Richtung der Photodiodenschicht 28. Die Lichtstrahlen 30 passieren eine Zwischenschicht 22 und treffen danach auf die einzelnen Photodioden D in der Photodiodenschicht 28. Die Lichtstrahlen 30 treffen, wie auf die Photodioden D, auch auf die Zwischenräume Z. Unter der Photodiodenschicht 28 befindet sich die Reflektoranordnung 23. An dieser Reflektoranordnung 23 werden die Lichtstrahlen 30, die Zwischenräume Z passiert haben, reflektiert und werden am Übergang von der Szintillatoranordnung 21 zur Zwischenschicht 22 oder nachdem die Lichtstrahlen 30 wiederum in den Szintillator 21 eingedrungen sind, von der Deckschicht 19 zurückreflektiert und können somit in die jeweiligen Photodioden D gelangen und zur Signalerzeugung beitragen. Unter der Reflektoranordnung 23 ist eine Glasschicht 24 angeordnet. Diese Glasschicht 24 dient als Träger oder Substrat für den Röntgendetektor. Unter dieser Glasschicht 24 ist eine Rücksetzanordnung 25 angebracht. Diese Rücksetzanordnung 25 umfasst mehrere nicht dargestellte Lichtquellen, beispielsweise Leuchtdioden, die Licht 29 in einem Spektralbeteich aussenden, welches zum Rücksetzen der Photodioden geeignet ist. Mittels dieses Lichtes werden die Photodioden D zurückgesetzt. Die Reflektoranordnung 23 ist für das Rücksetzlicht 29 durchlässig.

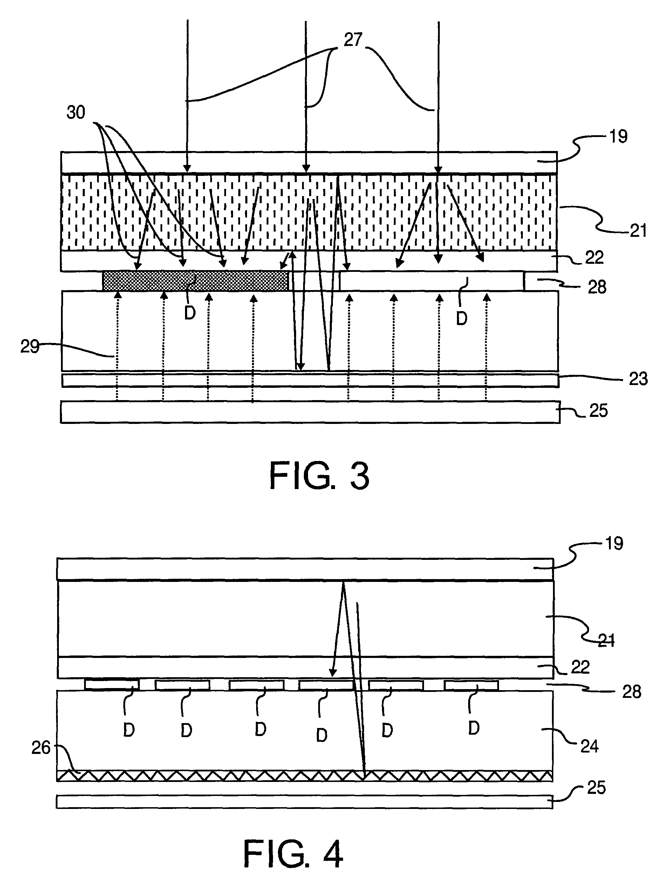

In Figur 3 ist eine erfindungsgemäße Anordnung gezeigt, bei der die Reflektoranordnung 23 unter der Glasplatte 24 angeordnet ist. Lichtstrahlen 30 die in die Zwischenräume Z fallen, passieren diese Glasschicht 24, um an der Unterseite der Glasschicht von der dort angeordneten Reflektorschicht 23 reflektiert zu werden und wiederum die Glasschicht 24 zu passieren, um am Übergang zwischen der Zwischenschicht 22 und der Szintillatoranordnung 21 oder an der Deckschicht 19 oberhalb des Szintillators 21 reflektiert zu werden, um von dort in die jeweiligen Photodiode D reflektiert zu werden und zur Signalerzeugung beizutragen. Die Reflektoranordnung 23 ist auch in diesem Fall für Licht, was von unten in die Reflektoranordnung 23 einfällt, durchlässig. Insbesondere ist es für Licht im roten Spektralbereich durchlässig, welches von der unter der Reflektorschicht angeordneten Rücksetzanordnung 25 ausgesendet wird, um die Photodioden D zurückzusetzen.

Figur 4 zeigt eine weitere erfindungsgemäße Anordnung bei der unterhalb der Glasschicht 24 Retroreflektoren 26 angeordnet sind, die jeweils die in die Zwischenräume fallende Lichtstrahlung 30 zurück reflektiert, so dass das zurück reflektierte Licht zur Lichtausbeute beitragen kann, indem es an der Zwischenschicht oder Deckschicht wiederum reflektiert wird und in die Photodiode gelangt.

## Patentansprüche

1. Röntgendetektor zur Umwandlung von Röntgenstrahlung (27) in elektrische Ladungen, mit einer Photosensorenanordnung (28) und einer auf einer ersten Seite der Photosensorenanordnung (28) befindlichen Szintillatoranordnung (21),
**dadurch gekennzeichnet,**
**dass** sich auf der der ersten Seite gegenüberliegenden zweiten Seite der Photosensorenanordnung (28) eine Reflektoranordnung (23) befindet.

2. Röntgendetektor nach Anspruch 1,
**dadurch gekennzeichnet,**
**dass** die Reflektoranordnung (23) für Licht (29), welches aus Richtung der zweiten Seite der Photosensorenanordnung (28) auf die Reflektoranordnung (23) trifft, semitransparent ist.

3. Röntgendetektor nach Anspruch 1,
**dadurch gekennzeichnet,**
**dass** sich zwischen Photosensorenanordnung (28) und Reflektoranordnung ein den Röntgendetektor tragendes Substrat (24) befindet.

4. Röntgendetektor nach Anspruch 1,
**dadurch gekennzeichnet,**
**dass** die Reflektoranordnung (23) dielektrisch ausgeführt ist.

5. Röntgendetektor nach Anspruch 1,
**dadurch gekennzeichnet,**
**dass** die Reflektoranordnung (23) metallisch ausgeführt ist.

6. Röntgendetektor nach Anspruch 1,
**dadurch gekennzeichnet,**
**dass** die Reflektoranordnung mittels auf der zweiten Seite der Photosensorenanordnung (28) angeordneter Strukturen (26) realisiert ist.

7. Röntgendetektor nach Anspruch 1,
**dadurch gekennzeichnet,**
**dass** die Reflektoranordnung (23) vorgesehen ist, eine Reflexion des aus Richtung der ersten Seite einfallenden Lichts (30) zu ermöglichen und gleichzeitig ein Durchlassen von Licht (29) einer anderen Wellenlänge aus Richtung der zweiten Seite der Photosensorenanordnung (28) ermöglicht.

8. Röntgendetektor nach Anspruch 1 und 3,
**dadurch gekennzeichnet,**
**dass** das den Röntgendetektor tragende Substrat reflektierende Substanzen enthält.

9. Röntgenuntersuchungsgerät mit einem Röntgendetektor nach einem der Ansprüche 1 bis 8.
